# EUROPEAN PATENT SPECIFICATION

(11) **EP 3 124 308 B1**
(45) Date of publication and mention of the grant of the patent: **31.01.2018**
(21) Application number: 16180563.5
(22) Date of filing: 21.07.2016
(51) Int. Cl.: B60K 15/04, B60K 15/03

(54) **FUEL TANK COMPRISING A WELDED COMPONENT**
KRAFTSTOFFBEHÄLTER MIT EINEM GESCHWEISSTEN TEIL
RÉSERVOIR DE CARBURANT COMPRENANT UN COMPOSANT SOUDÉ

(30) Priority: 31.07.2015 EP 15306254
(43) Date of publication of application: 01.02.2017
(73) Proprietor: Plastic Omnium Advanced Innovation and Research, 1120 Bruxelles (BE)
(72) Inventor: COING, Jean-François, 60280 CLAIROIX (FR)
(74) Representative: de la Bigne, Guillaume Michel Marie

(56) References cited:
- DE-A1-102006 005 828
- JP-A- 2012 116 558
- US-A1- 2002 121 517
- US-A1- 2004 079 752

## Description

The present invention relates to a fuel tank having a wall with a fuel impermeable layer and an opening around which a component is welded.

Fuel tanks on board vehicles of various kinds generally have to meet imperviousness and permeability standards in relation to the type of use for which they are designed and the environmental requirements that they have to satisfy. Both in Europe and throughout the world, we are currently experiencing a considerable tightening of the requirements concerned with limiting the spread of pollutants into the environment. The design of fuel tanks is therefore evolving quickly towards techniques capable of better guaranteeing the imperviousness and safety under varying conditions of use.

Fuel tanks generally comprise a barrier layer made of a fuel impermeable material, usually a resin such as EVOH (a copolymer of ethylene and partially hydrolized vinyl acetate). In multilayer fuel tanks, the fuel impermeable layer is generally an intermediate layer sandwiched between two fuel permeable layers, for example made of a thermoplastic such as high density polyethylene (HDPE). Therefore, fuel tanks are globally impermeable. However, an onboard fuel tank is connected to other components, usually impermeable to fuel, requiring the presence of apertures on the tank wall around which the components are fastened. Theses apertures represent high risk of fuel leak or permeation because the fastening flange of the components cannot be in contact with the fuel impermeable layer of the tank wall to form a sealed volume. This is because the precise position of the fuel impermeable layer of the tank wall is unknown and inserting too deeply the fastening flange of the component in the tank wall increase the risk to pierce the fuel impermeable layer. The distance of the impermeable layer of the component to the impermeable layer of the tank wall depends on the total thickness of the tank wall, the layer thickness distribution of the tank wall and the stretch of the wall in the welding area inherent to the blow molding process, if such a process is used to manufacture the tank wall.

Document DE 10 2006 005828 discloses an example of fuel tank having a wall with an opening and a fuel impermeable layer, and comprising a component welded to the wall.

To control the fuel leak, it is necessary to know precisely the permeation paths of the fuel around the aperture defined by the existing space between the flange of the accessory and the fuel impermeable layer of the tank wall. However, since the precise position of the fuel impermeable layer in the thickness of the tank wall is unknown, these permeation paths are not predetermined.

It is therefore an object of the invention to provide a fuel tank with improved imperviousness around an opening on the tank wall, in particular by controlling existing permeation paths.

The invention relates to a fuel tank having a wall with an opening, the wall having a fuel impermeable layer, the fuel tank comprising a component welded to the wall around the opening, the component having a fuel impermeable layer, wherein the fuel tank comprises a fuel impermeable insert, at least partially embedded in the wall around the opening and arranged in between the fuel impermeable layer of the tank wall and the fuel impermeable layer of the component.

The insert is preferably fastened to the wall by overmolding. In other words, the insert has a surface which is in front of the portion of the component welded to the wall and a surface which is in front of the fuel impermeable layer of the wall. The position of the insert being predetermined, the distance between the impermeable insert and the component is known. Therefore, the fuel permeation path is controlled. Moreover, the distance between the insert and the fuel impermeable layer of the wall is better controlled because the depth of the insert in the tank wall is mastered during its fastening process, while in the case of the welding of the component to the tank wall without the insert, the distance of the component impermeable layer to the tank wall impermeable layer is the result of the pressure applied by a robot to the component, balanced by the resistance to deformation of the melt material. This position cannot be predetermined.

Preferably, the insert has such dimensions that the impermeable layer of the tank wall and the impermeable layer of the component are spaced apart. Keeping the impermeable layer of the tank wall away from the impermeable layer of the component allows the component to penetrate inside the tank wall without risk of piercing the impermeable layer of the tank wall. In other words, the insert acts as a spacer between these two impermeable layers, which is unsual, since the intuitive way to reinforce the leak-tightness of the tank-component welding is usally to have the two impermeable layers (of the tank wall and of the component) as close as possible to each other. In a preferended embodiment, the shortest distance between the impermeable layer of the tank wall and the impermeable layer of the component is a few millimeters.

In different embodiments of the invention, the fuel tank may have the following non-limitative features:
- The overmolding of the insert to the wall can be performed by co-injection and preferably by bi-injection.
- The insert is composed of a core surrounded by an outer layer. The core is made of a material having good barrier property, such as PA6, PA66, PA12, PPA, metal, aluminium or any other material known by the person skilled in the art The outer layer is preferably a modified HDPE, such as HDPE grafted with maleic anhydride. The thickness of the outer layer is around 0.2 - 0.5 mm in the functional areas where the barrier effect occurs.
- The insert is an annular insert.
- The insert can be a single piece or an assembly of several parts.
- The insert comprises an abutment surface defining a penetration limit for the component during welding of the component to the wall.
- The component is welded to the wall in a welding zone located in the vicinity of the fuel impermeable layer of the component.
- The projection of the welding zone of the component in the penetration direction is shifted relative to the abutment surface of the insert.
- The insert comprises an internal surface which follows the shape of the fuel impermeable barrier of the wall.
- The maximal distance between the internal surface of the insert and the fuel impermeable barrier of the wall is inferior to 200 µm, preferably inferior to 100 µm, more preferably inferior to 40 µm.
- The internal surface comprises a protrusion.
- The insert is made of a fuel impermeable material.
- The insert comprises a fuel impermeable layer, preferably an external fuel impermeable layer.

Another subject matter of the invention is a method for welding a component to a wall of a tank around an opening of the wall, the wall having a fuel impermeable layer, comprising the following steps:
- overmolding an insert inside a parison during blow molding of the parison so that the insert is at least partially embedded in the parison around the location of the opening,
- welding the component over the insert.

In the context of the invention, "parison" means a tubular or sheet like preform of plastic.

In a particular embodiment, the component is welded on the external face of the tank wall.

In another particular embodiment, the component is welded on the internal face of the tank wall.

In yet another embodiment, the component is welded after the tank is manufactured, i.e. removed from the mold. In this particular embodiment, it is avantageous that the method includes a cooling step for the tank wall priori to perform the welding.

In a further embodiment, the component is welded during the manufacturing of the tank. For example, the tank can be manufactured by blow molding of a sheet like parison and the component can be brought by a core or a robot against the tank wall for being welded to the tank wall.

This method has different embodiments:
- the opening is obtained by drilling the rigid wall through the insert.
- the opening is obtained by piercing the parison during blow molding of the parison.

The invention will be better understood through the following figures which illustrate certain concrete aspects of the invention. The figures are only shown as examples and do not limit the scope of the present invention.
Figure 1 is a global view of a tank with two components welded thereon.
Figure 2 is a longitudinal sectional view of one of the components and the part of the tank receiving the component, just after molding, according to a **first** embodiment of the invention.
Figure 3 is a view similar to the one of figure 2, illustrating a **second** embodiment of the invention.
Figure 4 is a view similar to the one of figure 2, illustrating a **third** embodiment of the invention.
Figure 5 is a view similar to the one of figure 2, illustrating a **fourth** embodiment of the invention.
Figures 6a, 6b, 6c illustrate a first manufacturing process for obtaining the embodiment of figure 5.
Figures 7a, 7b, 7c, 7d illustrate a second manufacturing process for obtaining the embodiment of figure 5.

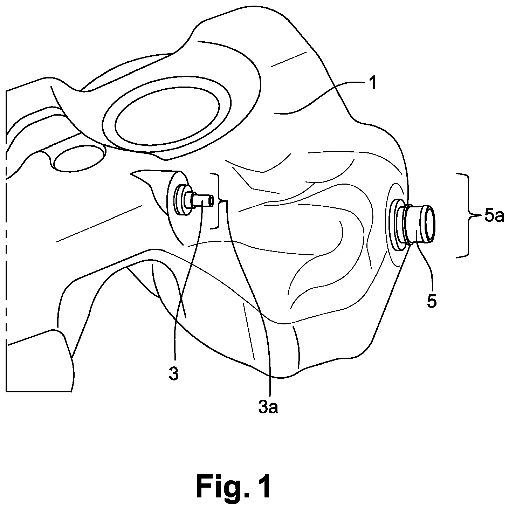

Figure 1 shows a tank 1 comprising two components 3, 5 welded thereon. The first component of the tank 1 is a nipple 3 located in the upper part of the tank 1 and an inlet check valve 5 located in the lower part of the tank 1.

The shape of the tank 1 has no importance in the context of this invention. The only relevant geometrical feature of the tank is its shape in the part 3a, 5a around each component 3, 5.

Nipple 3 and inlet check valve 5 are components which connect to the tank 1 in order to allow a fluid communication between the inside and the outside of the tank, by means of external pipes (not shown). The invention is not limited to such components allowing a fluid circulation between the inside and the outside of the tank. In other words, the components 3, 5 may be closed at one end to carry out a specific function which would not be a circulation of liquid.

The important feature of the components 3, 5 is that they have to be tightly connected to the tank, so that any leak of fluid at the interface between the wall of the tank and the component is prevented or at least controlled.

In the following figures, sectional views are represented of component 5. However, it could be any one of the two components 3, 5 of figure 1, which are given only as examples of possible components weldable to a tank recording to the invention.

In the sectional view of figure 1, part 5a of the tank wall 7 is represented with a hole 7a. The component wall 9 is represented with an opening 9a in front of the hole 7a. The component has a cylindrical shape in this example but any shape of the component would be acceptable.

The tank wall 7 and the component wall 9 each comprise an impermeable layer 11, respectively 13, which prevents the liquid present inside the tank 1 from passing through the tank wall 7 or through the component wall 9. In this example, the tank impermeable layer 11 is included inside the tank wall 7 and is roughly located in the middle of the thickness of the tank wall 7 and the component impermeable layer 13 covers the internal face of the component wall 9. In this example, the tank is a fuel tank and the impermeable layers 11 and 13 are fuel impermeable layers made of EVOH.

The component is welded to the tank wall 7 around the hole 7a, which forms an opening of the wall. In most cases, the hole 7a and the opening 9a of the component are aligned along a longitudinal axis X-X of the component.

The welding of the component 5 to the tank wall 7 results in a partial penetration of the component 5 inside the tank wall 7. This penetration creates a direct contact and a merging of the materials of the tank wall 7 and the component wall 9 are made of. More specifically, the plastic material surrounding the fuel impermeable layer 11 of the tank and the plastic material the component wall 9 is made of are chemically compatible and able to merge during welding, to form a continuous medium. Unlike the material of the tank wall 9, the material of the component impermeable layer 13 is usually not chemically compatible with the plastic material of the tank wall 9. Thus, after having penetrated in the tank wall 7, it does not merge with this material. Consequently, the mechanical link between the component 5 and the tank wall 7 is performed by the welding of the material of the component wall 9 with the material of the tank wall 7. This is why it is preferable to design the position of the component impermeable layer 13 on the component wall 9 so that the part of the component 9 penetrating in the tank wall 7 shows an external surface free of impermeable layer 13.

It is also preferable that the external surface of the component which penetrates inside the tank wall and which is chemically compatible with the plastic material of the tank wall is surrounded by a sufficient quantity of tank wall material. Thus, the mechanical constrains resulting from the use of the component during lifetime of the tank can be withstand.

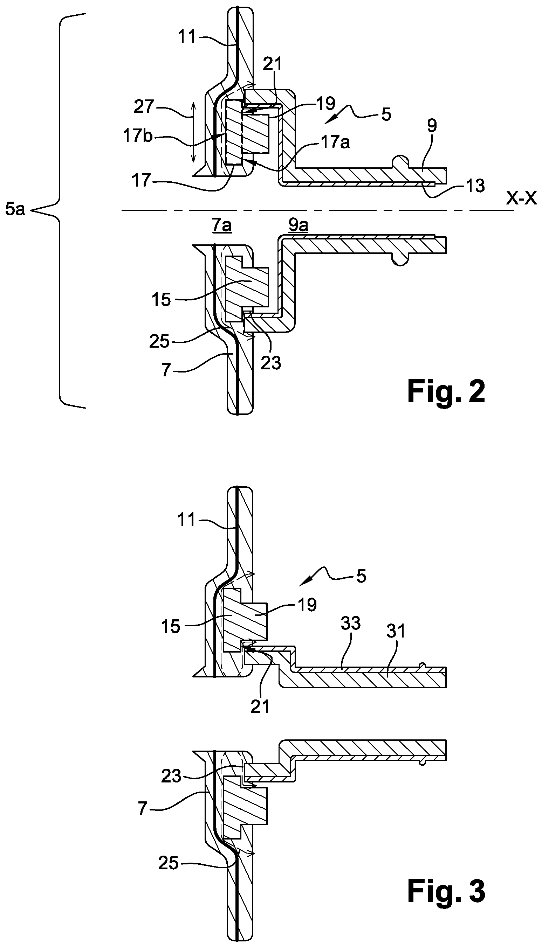

As shown on figure 2, an insert 15 is also embedded in the tank wall 7, around the opening 7a. The insert 15 is arranged in between the two impermeable layers 11 and 13.

The insert 15 has an annular shape. It is made of an impermeable material. The cross section of the insert 15 shows that it has a T-cross section resulting geometrically of the stacking of two rings, represented by a dash line on figure 2: an internal flat ring 17 and a protruding thick ring 19 which emerges at the external face of the tank wall 7. The external face 17a of the internal flat ring 17, which is not overlapped by the protruding thick ring 19, makes a shoulder surface 21 positioned in front of the part of the component wall 9 which has penetrated the plastic material of the tank wall 7 during welding. The location of the shoulder surface 21 is such that it leaves room for a sufficient quantity tank wall plastic material in front of the plastic material of the component wall 9, so that sufficient tank wall plastic material surrounds the welding zone. In other words, the shoulder surface 21 is more or less in front of the component impermeable layer 13 but offset of the component wall 9, to allow a reliable welding of the component wall 9 to the tank wall 7.

In the assembly represented on figure 2, the welding of the component wall 9 to the tank wall 7 has the advantage of a good control of the leak of liquid from the inside of the tank to the outside of the tank. The leak can take place in two escape ways which are represented by dotted arrows: a short escape way 23 and a long escape way 25. The short escape way is a way going in between the insert 15 and the impermeable layer 13 of component wall 9, whereas the long escape way 25 goes in between the tank impermeable layer 11 and the insert 15.

Each of these two escape ways will now be detailed.

The short escape way 23 is a narrow passage between the end of the component impermeable layer 13 and the insert 15. In the drawing, this narrow passage is located between the shoulder surface 21 and the end of the impermeable component layer 13. The width of this short escape way is dimensioned depending on the penetration of the component wall 9 in the tank wall 7. This penetration is fortunately well controlled in the invention because of the presence of the insert 15 in the tank wall 7 at the time the component wall 9 is welded to the tank wall 7: the presence of the insert 15 in the tank wall 7 at the time of welding allows to push the component 5 during welding against the tank wall with a strength which is high enough for the component impermeable layer 13 to penetrate as close as possible to the shoulder surface 21 without any risk of piercing or breaking the tank impermeable layer 11, which is far away from the component 5 thanks to the shoulder surface 21. The insert 15 acts as an abutment for the component 5 during welding, as well as spacer with respect to the tank impermeable layer 11.

Accordingly, with respect to the short escape way 23, the invention provides an efficient way of limiting the leak through the short escape way thanks to a good control of the narrow passage between the component impermeable layer 13 and the insert 15.

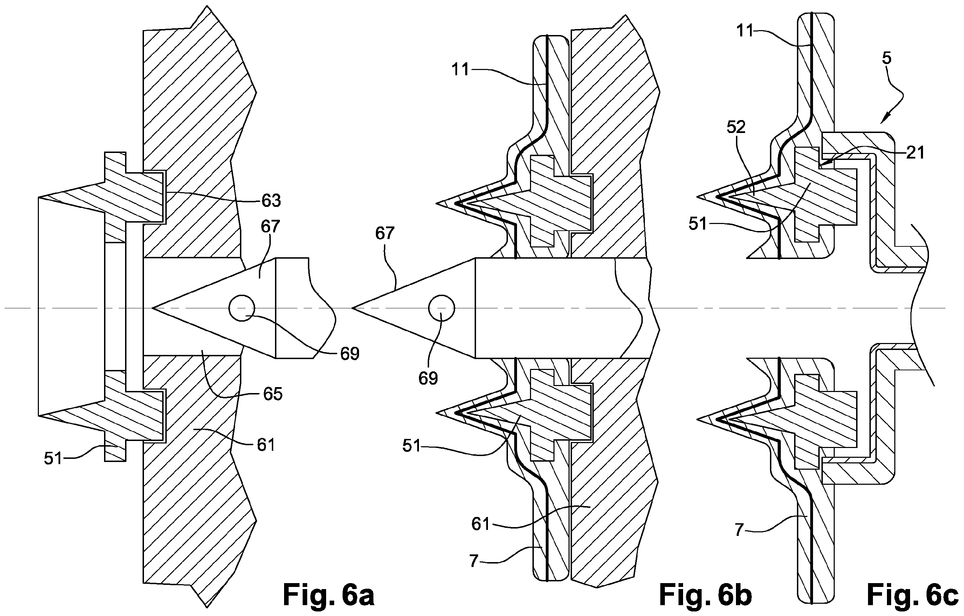

As regards the long escape way 25, the leak of fluid occurs between the tank impermeable layer 11 and the insert 15 independently of the welding of the component wall to the tank wall. The long escape way 25 is determined by the length of the internal surface 17b of the insert (the length on the sectional view is a radial dimension of the annular insert 15) which is represented on figure 2 by dimension 27. The distance between the tank impermeable layer 11 and the insert 15 is determined by the way the insert 15 is embedded in the tank wall, which will be described referring to figure 6.

Allowing a good control of the short escape way 23 and long escape way 25, the insert 15 provides a good control of the leak of liquid outside the tank and secures the tightness of the welding of the component wall 9 to the tank wall 7.

In the embodiment of figure 3, the component 31 has another shape and its position relative to the insert 15 is inverted, i.e. the insert 15 surrounds the component 31. In this embodiment, the shoulder surface 21 of the insert 15 is inside located inside the opening of the protruding thick ring 19. Unlike the components of the previous embodiment, component 31 has its impermeable layer 33 on the outside surface of the component.

The long escape way 25 is unchanged but the short escape way 23 passes between the external shoulder surface 21 and the component impermeable layer 33 which is outside the component.

In this embodiment, the plastic material of the component wall 9 which has penetrated inside the tank all is also surrounded by a large quantity of plastic material of the tank wall 7 so that the merging of these two chemically compatible plastic materials creates a continuous medium which contributes to an efficient welding. The component impermeable layer 33 faces the shoulder surface 21.

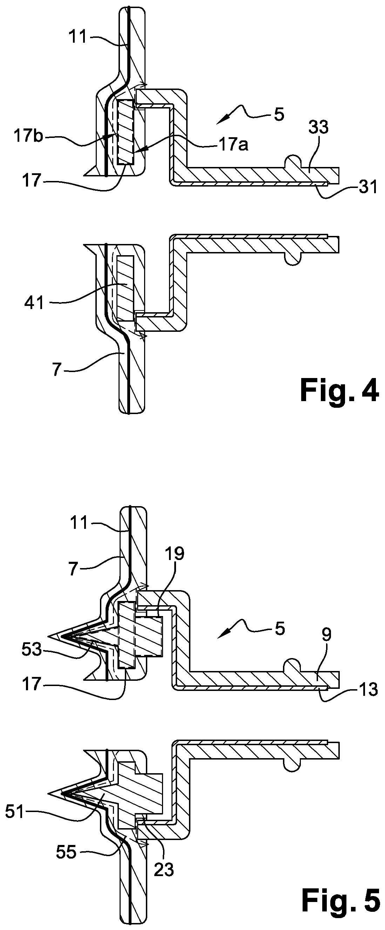

In the embodiment of figure 4, the component 5 is identical to the one of figure 2, but the insert 41 is completely embedded in the tank wall 7. The insert 41 is not composed of a stack of two annular rings: it is only composed of an internal flat ring 17 whose internal and external faces 17a, 17b are completely covered by the plastic material of the tank wall 7. On figure 4, the long and short escape ways 23, 25 are identical to the ones of figure 2.

This embodiment has the same properties as the one on figure 2 as regards the leak tight of the welding.

In the embodiment of figure 5, the component is identical to the one of figures 2 and 4, but the insert 51 has a different shape. Insert 51 geometrically results from the stacking of three elementary rings: an internal flat ring 17 as previously described, a protruding thick ring 19 on the external side of the internal flat ring 17 as previously described, and a sharp internal ring 53 (i.e. a protrusion) on the internal side of the internal flat ring 17. These three rings 17, 19, 53 are referred to with the purpose of describing the shape of the insert 51, but the insert 51 is an integral piece. In other words, there is no physical boundary between the annular rings 17, 19 and 53. The insert 51 can be obtained by any appropriate method, including compression molding or milling.

In this embodiment, the short escape way 23 is identical to the one previously described. On the other hand, the long escape way 55 differs from the one previously described in that the leak of liquid or gas has to by-pass the internal sharp face of the insert 51 (defined by the sharp ring 53), along its internal face, which is covered by the plastic material of the tank wall 7, with the tank impermeable layer 11 extending almost parallel to the surface of the internal sharp face of the insert 51. Consequently, the long escape way 55 has an increased length and the minimal distance between the tank impermeable layer 11 and the insert 51 is reduced because of the sharp shape of the insert 51 on its internal side.

Accordingly, the insert 51 provides a better leak-tightness of the welding between the component and the tank.

The process for obtaining the assembly of figure 5 will now be described on figures 6a, 6b and 6c.

In a first step (figure 6a), the insert 51 is positioned on a mold 61 having a groove 63 to receive it, located along a through-hole 65. The mold 66 can be one of the two halves of a mold for the blow molding of a parison as described in document EP1261473B1, the content of which is incorporated by reference. The mold 61 can also be a separate mold used for the blow molding of one half of the tank and the half of the tank thus obtained is subsequently welded to another half of the tank to build the complete tank.

As shown on figure 6a, a needle 67 is axially moveable in the mold between a retracted position, shown in figure 6a, where the needle stays outside the internal volume of the mold 61 and extended position, shown in figure 6b, where the needle 67 protrudes inside the internal volume of the mold 61.

According to this process, after the insert 51 has been positioned in the groove 63, a parison, which is a sheet of plastic material freshly extruded, still hot and malleable, is brought parallel to the mold surface, over the mold surface and the insert 51. Then, a gas which can be hot and compressed air, is blown inside the mold 61 to blow the parison and push it against the internal mold surface and insert 51. A short moment after the parison has brought the insert and fitted the shape of the mold and insert, the needle 67 is moved from his retracted position to its extended position (figure 6b). The needle pierces the parison and, once it is inside the parison, helps in the gas blowing thanks to an internal channel 69 leading inside the mold.

The gas escaping in the mold compresses the parison while the mold is cooled, for a duration sufficient for the stiffening of the tank wall. Thanks to this process, the position of the insert relative to the tank wall is precisely fixed because it only depends on the depth of the groove 63. Another advantage of this process is that since there is no rigid part pressing the internal sharp face of the insert 51, the parison fits the shape of the insert 51 without piercing the tank impermeable layer 11. But thanks to the blowing process, the distance between the tank impermeable layer 11 and the insert 51 is reduced as much as possible. Thus, the long escape way is optimized for a good tightness of the tank.

After the blowing process has taken place, the tank made of the tank wall and the embedded insert 51 is removed from the mold 61 and the component is welded on the tank wall. During welding, a hot mirror radiating heat is placed between the tank wall and the component, facing each other. When the plastic materials have sufficiently melt, the hot mirror is removed and the component is pushed against the tank wall in the X-X axis direction. During the welding, the strength applied to the component is controlled and the component penetrates in the tank wall as deeply as possible, depending on this strength. Thanks to the presence of the insert 51 and its shoulder surface 21, the component cannot pierce the tank impermeable layer 11 whereas it comes very close to the insert, thus providing an efficient leak tight short escape way.

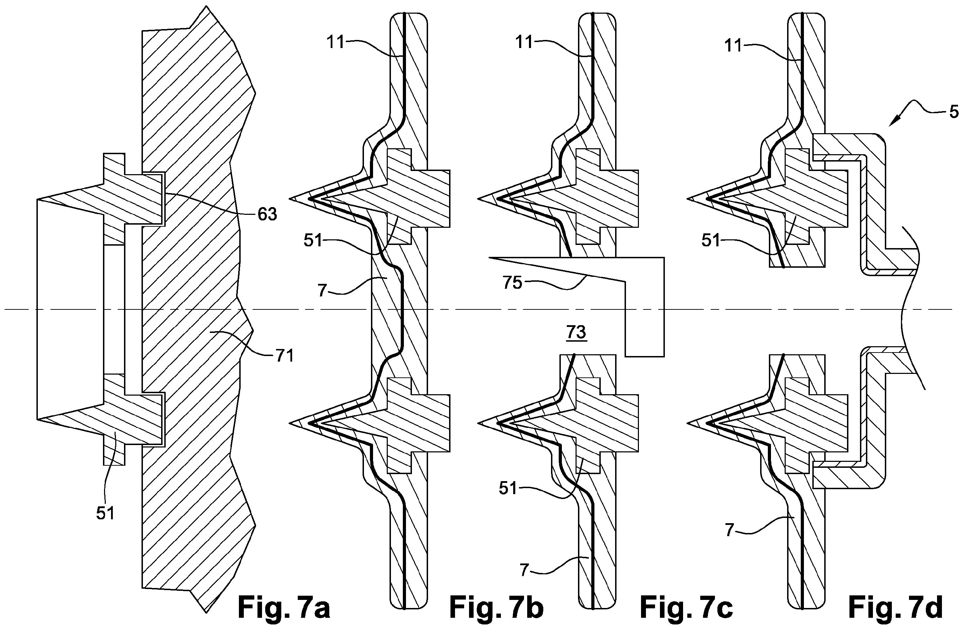

In the process illustrated on figures 7a, 7b, 7c, 7d, the mold 71 is different from the mold 61 in that it does not comprise any through-hole nor any needle. The blowing process is the same as previously described: a parison is brought parallel to the mold, covering the insert, and a gas is blown to push the parison against the wall and the insert and fit their shape. Once the tank wall is sufficiently rigid, it is withdrawn from the mold, as illustrated by figure 7b. As shown on figure 7c, a cutter 75 drills a through-hole 73 in the tank wall, in the middle of the insert 51. After this drilling step of figure 7c, the tank wall is identical to the one previously described and the welding process can occur according to the steps described in reference to figure 6c.

To sum up, the presence of the insert 15, 41, 51 inside the tank wall contributes to optimizing the leak-tightness of the welding by creating two escape ways: a long escape way and a short escape way. These two escape ways are controlled in length and width by a controlled reduced distance between the insert and the impermeable layer, either of the tank or of the component.

### Lexicon:

### FIGS 1-2

Tank 1
Nipple 3
Inlet check valve 5
Tank wall 7
Hole 7a
Component wall 9
Opening 9a
Tank impermeable layer 11
Component impermeable layer 13
Insert 15
Internal flat ring 17
Protruding thick ring 19
Shoulder surface 21
Short escape way 23
Long escape way 25
Length of the annular insert 27

### FIG.3

Component 31
Component impermeable layer 33

### FIG.4

Insert 41

### FIG.5

Insert 51
Internal sharp ring 53
Long escape way 55

### FIG.6

Mold 61
Groove 63
Through-hole 65
Needle 67
Channel 69

### FIG.7

Mold 71
Hole 73
Cutter 75

## Claims

1. A fuel tank (1) having a wall (7) with an opening (7a), the wall (7) having a fuel impermeable layer (11), the fuel tank (1) comprising a component (3, 5) welded to the wall (7) around the opening (7a), the component (3, 5) having a fuel impermeable layer (13), **characterized in that** the fuel tank (1) comprises a fuel impermeable insert (15), at least partially embedded in the wall (7) around the opening (7a) and arranged in between the fuel impermeable layer (11) of the tank wall (7) and the fuel impermeable layer (13) of the component (3, 5).

2. The fuel tank (1) according to claim 1, wherein the insert (15) has such dimensions that the impermeable layer (11) of the tank wall (7) and the impermeable layer (13) of the component (3, 5) are spaced apart.

3. The fuel tank (1) according to any one of claims 1 and 2, wherein the insert (15) comprises an abutment surface (21) defining a penetration limit for the component (3, 5) during welding of the component (3, 5) to the wall (7).

4. The fuel tank (1) according to claim 3, wherein the component (3, 5) is welded to the wall (7) in a welding zone located in the vicinity of the fuel impermeable layer (13) of the component (3, 5).

5. The fuel tank (1) according to claim 4, wherein a projection of the welding zone of the component (3, 5) in the penetration direction is shifted relative to the abutment surface (21) of the insert (15).

6. The fuel tank (1) according to any one of claims 1 to 5, wherein the insert (15) comprises a surface facing the fuel impermeable barrier (11) of the wall (7) and wherein the maximal distance between the surface of the insert (3, 5) facing the fuel impermeable barrier (11) of the wall (7) and the fuel impermeable barrier (11) of the wall (7) is inferior to 200 µm, preferably inferior to 100 µm, more preferably inferior to 40 µm.

7. The fuel tank (1) according to any one of claims 6, wherein the internal surface comprises a protrusion.

8. The fuel tank according to any one of claims 1 to 7, wherein the insert (15) is made of a fuel impermeable material.

9. The fuel tank according to any one of claims 1 to 8, wherein the insert (15) comprises a fuel impermeable layer, preferably an external fuel impermeable layer.

10. Method for welding a component (3, 5) to a wall (7) of a tank (1) around an opening (7a) of the wall (7), the wall (7) having a fuel impermeable layer (11), comprising the following steps:
- overmolding an insert (15) inside a parison during blow molding of the parison so that the insert (15) is at least partially embedded in the parison around the location of the opening (7a),
- welding the component (3, 5) over the insert (15) so that the insert (15) is arranged in between the fuel impermeable layer (11) of the tank wall (7) and the fuel impermeable layer (13) of the component (3, 5).

11. Method according to claim 10, wherein the opening (7a) is obtained by drilling the rigid wall (7) through the annular insert (15).

12. Method according to any one of claims 10 and 11, wherein the opening (7a) is obtained by piercing the parison during blow molding of the parison.

## Patentansprüche

1. Ein Kraftstofftank (1), welcher eine Wand (7) aufweist mit einer Öffnung (7A), wobei die Wand (7) eine kraftstoffundurchlässige Schicht (11) aufweist, wobei der Kraftstofftank (1) eine Komponente (3, 5) aufweist, welche an die Wand (7) um die Öffnung (7A) geschweißt ist, wobei die Komponente (3, 5) eine kraftstoffundurchlässige Schicht (13) aufweist, **dadurch gekennzeichnet, dass** der Kraftstofftank (1) einen kraftstoffundurchlässig Einsatz (15) aufweist, welcher zumindest teilweise in die Wand (7) um die Öffnung (7A) eingebettet ist und zwischen der kraftstoffundurchlässigen Schicht (11) der Tankwand (7) und der kraftstoffundurchlässigen Schicht (13) der Komponente (3, 5) angeordnet ist.

2. Der Kraftstofftank (1) gemäß Anspruch 1, wobei der Einsatz (15) so dimensioniert ist, dass die undurchlässige Schicht (11) der Tankwand (7) und die undurchlässige Schicht (13) der Komponente (3, 5) voneinander beabstandet sind.

3. Der Kraftstofftank (1) gemäß einem der Ansprüche 1 und 2, wobei der Einsatz (15) eine Anschlagoberfläche (21) aufweist, welche eine Eindringungsgrenze für die Komponente (3, 5) während dem Schweißen der Komponente (3, 5) an die Wand (7) definiert.

4. Der Kraftstofftank (1) gemäß Anspruch 3, wobei die Komponente (3, 5) in einer Schweißzone an die Wand (7) geschweißt ist, wobei die Schweißzone in Nachbarschaft zur kraftstoffundurchlässigen Schicht (13) der Komponente (3, 5) angeordnet ist.

5. Der Kraftstofftank (1) gemäß Anspruch 4, wobei eine Projektion der Schweißzone der Komponente (3, 5) in Einbringungsrichtung relativ zur Anschlagsoberfläche (21) des Einsatzes (15) verschoben ist.

6. Der Kraftstofftank (1) entsprechend einem der Ansprüche 1 bis 5, wobei der Einsatz (15) eine Oberfläche aufweist, welche der kraftstoffundurchlässigen Barriere (11) der Wand (7) zugewandt ist, und wobei die maximale Distanz zwischen der Oberfläche des Einsatzes (3, 5) welche der kraftstoffundurchlässigen Barriere (11) der Wand (7) zugewandt ist, und der kraftstoffundurchlässigen Barriere (11) der Wand (7) geringer ist als 200 µm, vorzugsweise geringer ist als 100 µm, besonders bevorzugt geringer ist als 40 µm.

7. Der Kraftstofftank (1) gemäß einem der Ansprüche 6, wobei die innere Oberfläche einen Vorsprung aufweist.

8. Der Kraftstofftank gemäß einem der Ansprüche 1 bis 7, wobei der Einsatz (15) aus einem kraftstoffundurchlässigen Material gefertigt ist.

9. Der Kraftstofftank entsprechend einem der Ansprüche 1 bis 8, wobei der Einsatz (15) eine kraftstoffundurchlässige Schicht aufweist, vorzugsweise eine externe kraftstoffundurchlässige Schicht.

10. Verfahren zum Schweißen einer Komponente (3, 5) an eine Wand (7) eines Tanks (1) um eine Öffnung (7A) der Wand (7), wobei die Wand (7) eine kraftstoffundurchlässige Schicht (11) aufweist, umfassend die folgenden Schritte:
- Umspritzen eines Einsatzes (15) innerhalb eines Formlings während einem Blasformen des Formlings, so dass der Einsatz (15) zumindest teilweise in dem Formling um die Position der Öffnung (7A) eingebettet ist,
- Schweißen der Komponente (3, 5) über den Einsatz (15), so dass der Einsatz (15) zwischen der kraftstoffundurchlässigen Schicht (11) der Tankwand (7) und der kraftstoffundurchlässigen Schicht (13) der Komponente (3, 5) angeordnet ist.

11. Verfahren gemäß Anspruch 10, wobei die Öffnung (7A) durch Bohren der steifen Wand (7) durch den ringförmigen Einsatz (15) erhalten wird.

12. Verfahren gemäß einem der Ansprüche 10 oder 11, wobei die Öffnung (7A) durch Durchstechen des Formlings während dem Blasformen des Formlings, erhalten wird.

## Revendications

1. Un réservoir à carburant (1) ayant une paroi (7) avec une ouverture (7a), la paroi (7) comportant une couche (11) imperméable au carburant, le réservoir à carburant (1) comprenant un composant (3, 5) soudé à la paroi (7) autour de l'ouverture (7a), le composant (3, 5) comportant une couche (13) imperméable au carburant, **caractérisé en ce que** le réservoir (1) comprend un insert (15) imperméable au carburant, au moins partiellement encastré dans la paroi (7) autour de l'ouverture (7a) et disposé entre la couche (11) imperméable au carburant de la paroi du réservoir (7) et la couche (13) imperméable au carburant du composant (3, 5).

2. Le réservoir à carburant (1) selon la revendication 1, dans lequel l'insert (15) a des dimensions telles que la couche imperméable (11) de la paroi du réservoir (7) et la couche imperméable (13) du composant (3, 5) sont espacées.

3. Le réservoir à carburant (1) selon l'une quelconque des revendications 1 et 2, dans lequel l'insert (15) comporte une surface de butée (21) définissant une limite de pénétration du composant (3, 5) lors du soudage du composant (3, 5) à la paroi (7).

4. Le réservoir à carburant (1) selon la revendication 3, dans lequel le composant (3, 5) est soudé à la paroi (7) dans une zone de soudage située au voisinage de la couche (13) imperméable au carburant du composant (3, 5).

5. Le réservoir à carburant (1) selon la revendication 4, dans lequel une saillie de la zone de soudage du composant (3, 5) dans la direction de pénétration est décalée par rapport à la surface de butée (21) de l'insert (15).

6. Le réservoir à carburant (1) selon l'une quelconque des revendications 1 à 5, dans lequel l'insert (15) comprend une surface tournée vers la barrière (11) imperméable au carburant de la paroi (7), et dans lequel la distance maximale entre la surface l'insert (3, 5) tournée vers la barrière (11) imperméable au carburant de la paroi (7) et la barrière imperméable aux combustibles (11) de la paroi (7) est inférieure à 200 µm, de préférence inférieure à 100 µm, de façon encore préférée inférieure à 40 µm.

7. Le réservoir à carburant (1) selon l'une quelconque des revendications 6, dans lequel la surface interne comprend une protubérance.

8. Le réservoir à carburant selon l'une quelconque des revendications 1 à 7, dans lequel l'insert (15) est réalisé en un matériau imperméable au carburant.

9. Le réservoir à carburant selon l'une quelconque des revendications 1 à 8, dans lequel l'insert (15) comprend une couche imperméable au carburant, de préférence une couche externe imperméable au carburant.

10. Procédé de soudage d'un composant (3, 5) à une paroi (7) d'un réservoir (1) autour d'une ouverture (7a) de la paroi (7), la paroi (7) comportant une couche (11) imperméable au carburant, comprenant les étapes suivantes :
- surmouler un insert (15) à l'intérieur d'une paraison pendant le soufflage de la paraison de sorte que l'insert (15) soit au moins partiellement encastré dans la paraison autour de l'emplacement de l'ouverture (7a),
- souder le composant (3, 5) sur l'insert (15) de sorte que l'insert (15) soit disposé entre la couche imperméable au carburant (11) de la paroi du réservoir (7) et la couche (13) imperméable au carburant du composant (3, 5).

11. Procédé selon la revendication 10, dans lequel l'ouverture (7a) est obtenue en perçant la paroi rigide (7) à travers l'insert annulaire (15).

12. Procédé selon l'une quelconque des revendications 10 et 11, dans lequel l'ouverture (7a) est obtenue en perçant la paraison lors du soufflage de la paraison.
